# EUROPEAN PATENT SPECIFICATION

(11) **EP 3 080 653 B1**
(45) Date of publication and mention of the grant of the patent: **13.11.2019**
(21) Application number: 13811410.3
(22) Date of filing: 10.12.2013
(51) Int. Cl.: G02B 6/44

(54) **SPOOLING ASSEMBLY**
SPULENANORDNUNG
ENSEMBLE ENROULEMENT

(43) Date of publication of application: 19.10.2016
(73) Proprietor: Prysmian S.p.A., 20126 Milano (IT)
(72) Inventor: PANDOLFI, Carlo Matteo, 20126 Milano (IT); PERYER, Roger, 20126 Milano (IT)
(74) Representative: Colombo, Stefano Paolo
(86) International application number: PCT/EP2013/076045
(87) International publication number: WO 2015/086043

(56) References cited:
- FR-A1- 2 814 246
- GB-A- 2 216 481
- GB-A- 2 261 451
- US-A- 4 658 130
- US-A- 5 234 058

## Description

### BACKGROUND

The present invention relates to a spooling assembly comprising a reel, an optical cable and a pre-connectorized rack which is connected at one end of the optical cable. The present invention also relates to a method of assembling a spooling assembly and a rotation axle unit.

### PRIOR ART

Optical cables have been commonly deployed by installing them in ducts by blowing or pulling, burying them in the ground, or suspending them between above-ground poles.

As known, an optical cable typically comprises an optical core including one or more optical fiber units and an external sheath enclosing the optical core.

The external sheath is typically made of a polymeric material and has the primary function of protecting the optical core from the mechanical point of view. Within the external sheath, optical fiber units may be arranged in various ways.

In the so-called "central loose tube cables" (briefly, CLT cables), all the optical fiber units of the cable are loosely arranged within a single buffer tube, which is in turn enclosed by the external sheath.

In the so-called "multi loose tube cables" (briefly, MLT cables), the optical fiber units are instead divided into multiple bundles, the optical fiber units of each bundle being loosely arranged within a respective buffer tube.

Optical cable blowing technology has been introduced for reducing the cost of installation, improving the use of the conduit space and reducing the overall cost of the telecommunications infrastructure. This technology involves the deployment of ducts in the installation premise, in which optical cables can be subsequently inserted, when needed, by using a compressed air stream (blowing). Ducts are empty tubes of small outer/inner diameter and optical cables can be blown or pushed into empty or partially filled ducts by blown installation techniques.

A typical installation may comprise pushing a cable inside a duct by unwinding it directly from a reel where one end of the cable is factory equipped with optical (and, possibly, electrical) devices, such as optical connectors, arranged in a housing, called "pre-connectorized rack", in order to facilitate the operation of optical connection in the field, making installation faster and reducing the need of specialized operators and the risk of mistakes or damages.

In view of the above, unwinding the cable from the reel for installation implies to cause the reel to rotate and requires having the pre-connectorized rack attached to the reel, so that it can rotate together with the reel itself. In this context, the reel is typically associated with an axial support structure, which provides a rigid support for rotation.

For example, Tyco Electronics Corporation catalogue of Rapid Fiber Panels, second edition, discloses 12-fiber optical cables wound on a wood reel where the cable has a preinstalled pulling eye, at one end, and a pre-connectorized rack, at the other end. The pre-connectorized rack is fastened to the free top surface of a flange of the reel. The reel axis is arranged vertically to allow the cable to be spooled, and the assembly is then free to rotate. The Applicant has realized that this solution has the disadvantage that, since the spooling assembly is caused to rotate around a vertical axis, the cable coils on the reel are likely to fall down or become loose, in particular when the unwinding speed changes (for any reason), thereby creating problems to the cable pay-off. Moreover, this solution employs wood reel which has to be normally stored or sent back to the proprietor due to the high-cost of the reel itself.

GB 2 216 481 A discloses deployment of towed aircraft decoys which comprises the features of the preamble of claim 1.

US 5 234 058 A discloses a composite rod-stiffened spoolable cable with conductors.

GB 2 261 451 A discloses logging and/or servicing wells.

US 4 658 130 A discloses a fiber optic swivel coupler and method of use thereof

FR 2 814 246 A1 discloses an over length telecommunications fibre optic cable positioner.

### SUMMARY OF THE INVENTION

The Applicant has faced the problem of enabling a reliable and high speed installation of a cable having at one end a pre-connectorized rack arranged with a spooling assembly including a low-cost and/or disposable reel, suitable for cable shipping.

The Applicant has realized that, as the pre-connectorized rack must rotate together with the reel, when the overall weight of the pre-connectorized rack is not balanced around the rotation axis the moment of inertia of the spooling assembly is increased. As a consequence, the rotation speed of the spooling assembly during cable installation has to be maintained under a prefixed low velocity in order to avoid vibrations and stresses.

The Applicant has found that by properly arranging the pre-connectorized rack attached to a cable end within an inner volume of a low-cost reel on the cable is wound, and by providing a support spindles structure for the reel surrounding at least partially such inner volume, the moment of inertia of the spooling assembly can be minimized and the unwinding process can be made smooth and faster.

Therefore, according to a first aspect, the present invention provides a spooling assembly according to claim 1.

Preferably, the rotation axle unit further comprises first and second plates for supporting said at least two bars which run from the first plate to the second plate and wherein said first and second plates are connected to respective pivot pins.

Preferably, the pre-connectorized rack is arranged in a central position with respect to a reel axis.

Preferably, the reel comprises opposed flanges and each of said flanges comprises at least two holes for corresponding elongate bars.

Preferably, the reel comprises opposed flanges, wherein at least one of said flanges comprises a slot for passage of said optical cable.

Preferably, the assembly further including a body of filling material arranged in the inner volume of said reel.

According to a second aspect, the present invention provides a method of assembling a spooling assembly and a rotation axle unit, comprising.
providing a spooling assembly comprising a reel, an optical cable and a pre-connectorized rack which is connected to said optical cable, wherein said optical cable is at least partially wound on said reel and wherein said pre-connectorized rack is arranged within an inner volume of said reel,
providing a rotation axle unit for rotating said reel, the unit comprising two pivot pins projecting outwardly with respect to respective flanges of said reel and at least two elongate bars,
passing said elongate bars from one flange of the reel to an opposed flange of the reel through the inner volume of said reel.

The present invention will become more clear from the detailed following description, with reference to the following figures, wherein:
- Figure 1 is a diagrammatic exploded view of an assembly according to an example of the invention;
- Figure 2 is a diagrammatic view of an assembly according to the example of Figure 1;
- Figure 3 is a side view of the assembly according to the example of Figure 1, and
- Figure 4 is a diagrammatic exploded of the rotation axle unit according to the example of Figure 1.

### DESCRIPTION OF EXAMPLES

For the purposes of the present description and claims, an optical fiber unit comprises one (or more) optical fiber each consisting of a glass core, a glass cladding, a single or dual coating layer, such optical fiber or optical fibers being surrounded by an outer layer for protection against damages.

For the purposes of the present description and claims, an optical cable typically comprises an optical core including one or more optical fiber units and an external sheath enclosing the optical core. The external sheath is typically made of a polymeric material and has the primary function of protecting the optical core from the mechanical point of view.

For the purposes of the present description and claims, a spooling assembly comprises an optical cable pre-terminated at one end by a pre-connectorized rack and a reel around which at least a portion of said optical cable is wound.

For the purposes of the present description and claims, a pre-connectorized rack is a housing containing optical (and, possibly, electrical) devices connected to the optical fibers of the cable in the factory. Examples of optical devices include optical connectors, optical splitters, optical pigtails, etc.

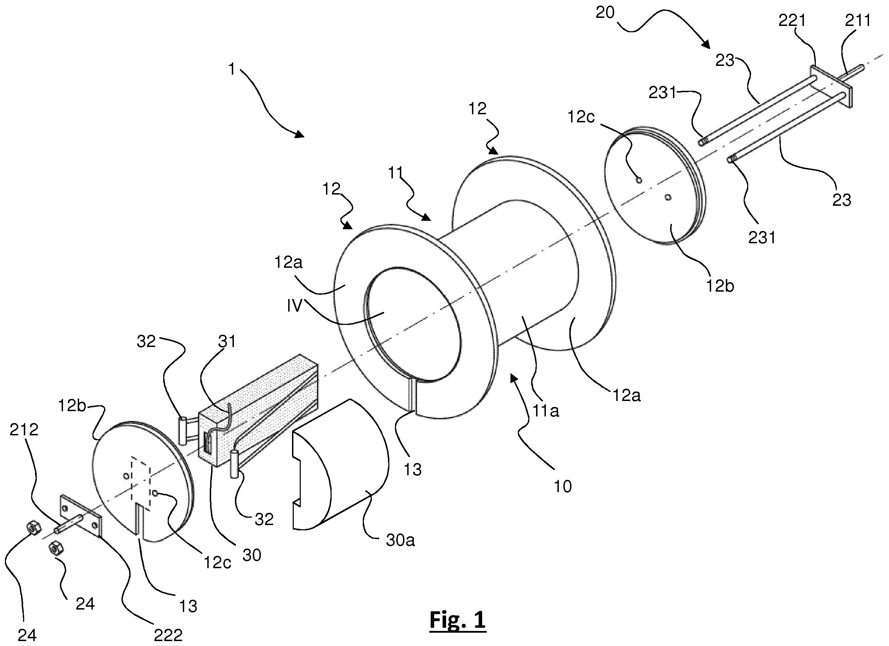

Figure 1 shows a diagrammatic exploded view of a spooling assembly according to an example of the invention. The spooling assembly is indicated by the reference number 1. As said above, the assembly 1 comprises a reel 10 and a pre-connectorized rack 30. The spooling assembly 1 may also comprise a rotation axle unit 20. Here below a description of the single parts will be given.

The reel 10 preferably comprises a drum 11 and two opposed flanges 12. Preferably, the drum 11 has a hollow cylinder shape. More preferably, the cross-section of the cylinder is circle. The opposed flanges 12 might be circular as in Figure 1 or they may have any other shape such as substantially square, hexagonal, octagonal or the like. In case the shape of the flange 12 is a (preferably regular) polygon, the corners could be rounded or bevelled.

Each of the flanges 12 forms a restraining annular surface 12a. The two restraining annular surfaces and the outer surface 11a of the drum 11 provide a restrained space for winding a length of an optical cable 31. Winding a length of an optical cable 31 includes forming a plurality of loops on the outer surface 11a of the drum, in one or more radially outer layers.

Each of the flanges 12 comprises a closure disk 12b which closes one respective end of the drum. The closure disk 12b could be a separate part from the restraining annular surface 12a as in Figure 1. As an alternative, the disk 12b could be integral with the restraining annular surface 12a.

Preferably, at least one of the flanges 12 comprises a slot 13 whose function will become clear in the following. In the example of Figure 1, only one of the flanges 12 has a single slot 13. In alternative, not shown, each of the flanges 12 has a slot 13 or several slots 13 (for instance, four slots, equally spaced one from the other). The slot(s) 13 can be only on the disk 12b or also on the annular surface 12a.

The reel 10 can be made, at least partially, in a material including a wood material (such as plywood), a plastic material, a cardboard material, a composite material or a metal material or any combination of them. Cardboard is preferred as it provides light weight and environment protection.

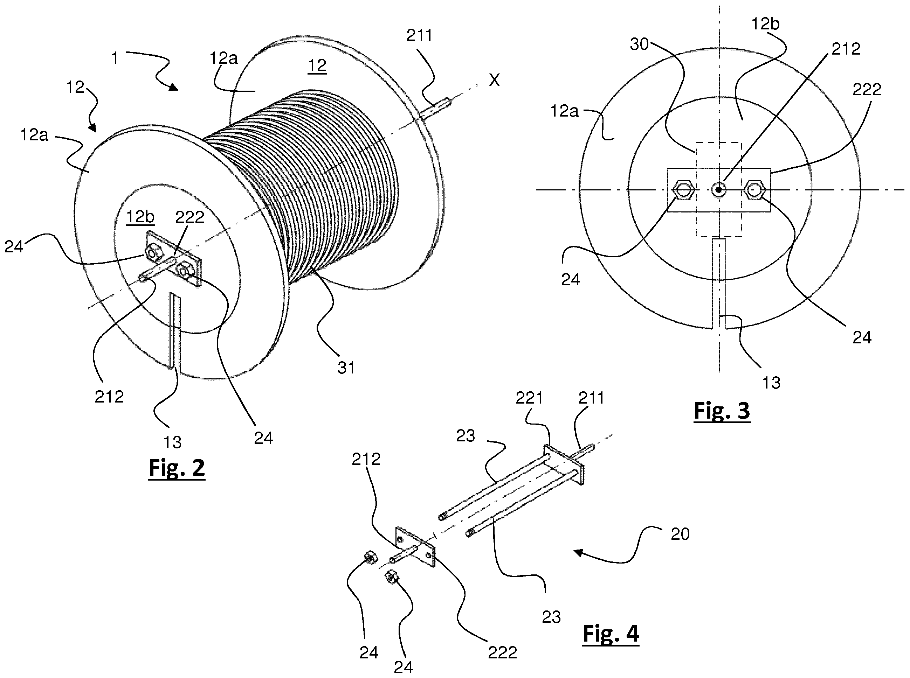

With reference also to the example shown in figure 4, the rotation axle unit 20 may comprise a cradle. In turn, the cradle 20 may comprise two pivot pins 211, 212 which project in opposed directions. The cradle 20 may preferably comprise two plates 221, 222 on which the pivot pins 211, 212 are rigidly connected. Preferably, the cradle 20 further comprises two or more elongate bars 23.

The cradle 20 can be disassembled in at least two separate parts. The first part (on the right in Figure 1) comprises a first pivot pin 211 connected to a first plate 221 and two parallel bars 23 also connected to the first plate 221 in the opposed direction with respect to the first pivot pin 211. The free ends 231 of the bars 23 could be threaded so that two corresponding nuts 24 could be screwed thereon.

While the cradle 20 can be made, in principle, in any material, it is preferable to make the cradle 20 at least partially of metal, such as steel or stainless steel.

According to one option, the cradle 20 can be provided fully mounted to the reel which is housing the pre-connectorized rack in its inner volume IV and shipped therewith.

According to another option, the cradle 20 can be provided separate from the reel which is housing the cable and the pre-connectorized rack and it should be mounted to the assembly before unwinding the optical cable during cable installation. Therefore, the reels are lighter and free from projecting parts such as pivot pins or the like, so that storing reels and transporting them to the installation site is easy and safe, and practically free from risk of damaging the cradle pivot pins. In addition, considerable weight is saved during reel shipping, because of the absence of the cradle.

According to a still another option, one single cradle 20 is provided to the installer. The installer can use the cradle 20 for unwinding a first reel and then he can remove the cradle from the empty reel and use it for one or several further reels. Therefore, the cradle becomes a tool which can be used several times during each installation or for multiple subsequent installations.

When the rotation axle unit 20 is fully assembled, the pivot pins 211, 212 lay on a single axis and the bars 23 extend substantially parallel to such axis. The bars 23 are at a predetermined distance one from the other. Such distance is at least as large as the thickness of the pre-connectorized rack 30 which will be described here below. In this manner, the pre-connectorized rack 30 can be arranged between the two bars 23.

As shown in Figure 1, the disks 12a, 12b of the flanges are preferably provided with holes 12c corresponding to the bars 23 so that the bars 23 can pass through the holes of the first and the second disks 12a, 12b.

Figure 1 also shows a pre-connectorized rack 30. Such a pre-connectorized rack could include any optical (and, possibly, electrical) device connected to an end of a length of an optical cable 31. The free, opposite end of the optical cable length pre-connectorized to the rack could comprise a pulling eye, or any other mechanical, electrical or optical device (not shown), compatible with the cable installation process.

In order to facilitate extraction of the pre-connectorized rack 30 once it has been inserted in the inner space of the drum, a handle arrangement could be provided. In the example of Figure 1, there are provided two handles 32 at the ends of a strip or of cords. This arrangement is profitable as it takes a minimum space and does not substantially affect the moment of inertia of the assembly.

In order to maintain the pre-connectorized rack 30 in the appropriate position within the drum, a properly shaped filling body 30a, such as a foam body, can be provided, as schematically shown in Figure 1. The foam body can be shaped to include a cavity for the pre-connectorized rack 30 and holes for the bars 23. Possibly, further cavities can be provided for the handles 32 or the like. If convenient, the filling body 30a can be split in two similar or different halves. In Figure 1 only one halve has been shown. The other halve can have, substantially, the same shape.

In order to mount the assembly, the first flange is made closed and the bars 23 of the cradle 20 are passed through the holes in the first flange 12 in a way so that the first pivot pin 211 is projecting outwardly.

Preferably, at least a part of the filling body 30a is inserted into the inner space of the drum so that a base of the pre-connectorized rack 30 does not touch directly the inner face of the flange 12. Preferably, the size of the filling body (or bodies), (preferably made of soft material) is such that when the pre-connectorized rack 30 is assembled, each base of the pre-connectorized rack 30 is at a same distance from the flanges 12, so as to have the assembly longitudinally substantially balanced.

The pre-connectorized rack 30 is arranged between the (two) bars 23. Preferably, the pre-connectorized rack 30 is not in direct contact with the bars 23 so that it does not run the risk to become damaged. Therefore, there is provided a space between the outer surface of the pre-connectorized rack 30 and the bars 23. Such space could be filled with filling material such as foam or the like.

As an alternative, the pre-connectorized rack 30 could be arranged between the bars 23 which limit movement at least in one direction.

When the pre-connectorized rack 30 is inserted, the handles 32 (if provided) are maintained substantially visible and graspable by a user. In this manner, a user will be able to grasp both the handles 32 with his hands and pull the pre-connectorized rack out.

When the pre-connectorized rack 30 is inserted, the optical cable is passed through the slot(s) in the flange. In this manner, the optical cable can be wound on the surface of the drum as said above.

The assembly is preferably completed by providing further filling material between the pre-connectorized rack and the second flange.

Finally, the second flange is closed by connecting the second plate and pivot pin to the bars. In one example, this is done by screwing bolts on the threaded ends of the bars.

Once the optical cable 31 is wound on the surface of the drum, the fully assembled assembly is as shown in Figure 2.

Profitably, according to the invention, the pre-connectorized rack 30 is maintained in a safe and protected housing within the drum 11. Profitably, the pre-connectorized rack 30 is maintained in a central position with respect to the flanges 12 of the reel 10. Preferably, the pre-connectorized rack 30 is maintained in a central position also with respect to the central axis of the reel 10. This result is obtained by the bars and/or by the filler body and/or other filling material arranged within the drum. Therefore, the moment of inertia is reduced.

Advantageously, the optical cable 31 can be unreeled with the assembly arranged with its axis X horizontal. This has several advantages over the prior art. For instance, the moment of inertia is reduced allowing the reel to rotate at a relatively high speed (for example up to 300 RPM). The arrangement for supporting the reel during pay-off can be a simple pair of supports at a certain distance. In addition there is no risk that the optical cable coils fall out of the flanges as in the prior art arrangements. Moreover, it is possible which must be maintained as low as possible, but it is to be considered that it must

When the optical cable is fully unreeled (advantageously by blowing and/or pulling), the second plate 222 is separated by the bars 23, for instance by screwing the bolts 24 off and in this manner the drum can be open by removing the second disk (or the whole second flange). If present, filling material is removed. The pre-connectorized rack therefore becomes accessible. In order to facilitate the extraction of the pre-connectorized rack, the handles can be grasped by the user. The optical cable connected to the pre-connectorized rack can pass through the slot in the flange.

In an exemplary example, a pre-connectorized rack can have a width from about 350 mm to 550 mm and a length from about 150 mm to about 250 mm and a thickness from about 45 mm to 225 mm.

## Claims

1. A spooling assembly (1) comprising a reel (10), an optical cable (31), a pre-connectorized rack (30) which is connected to said optical cable (31) and a rotation axle unit (20) for rotating said reel (10),
wherein said optical cable (31) is at least partially wound on said reel (10),
wherein said pre-connectorized rack (30) is arranged within an inner volume (IV) of said reel (10),
wherein said rotation axle unit (20) comprises two pivot pins (211, 212) projecting outwardly with respect to respective flanges (12) of said reel (10),
wherein said rotation axle unit (20) connects said pivot pins (211, 212) and runs at least partially in the inner volume of said reel (10),
**characterized in that** said rotation axle unit (20) comprises at least two elongate bars (23), and
wherein said pre-connectorized rack (30) is arranged between said at least two bars (23).

2. The assembly (1) of claim 1, wherein said rotation axle unit (20) further comprises a first and a second plate (221, 222), wherein said at least two bars (23) run from said first plate (221) to said second plate (222) and wherein said first and second plates (221, 222) are connected to one respective pivot pin (211, 212).

3. The assembly (1) of claim 1, wherein said pre-connectorized rack (30) is properly arranged in a central position with respect to a reel axis (X).

4. The assembly (1) of claim 1, 2 or 3, wherein said reel (10) comprises opposed flanges (12), wherein each of said flanges comprises at least two holes (12c) for said at least two elongate bars (23).

5. The assembly (1) of any of preceding claims, wherein said reel (10) comprises opposed flanges (12), wherein at least one of said flanges comprises a slot (13) for passage of said optical cable (31).

6. The assembly (1) of any of preceding claims, further including a body of filling material arranged in the inner volume of said reel.

7. The assembly (1) of any of preceding claims, further including a handle arrangement in order to facilitate extraction of the pre-connectorized rack (30) from the drum.

8. The assembly (1) of claim 7, wherein said handle arrangement comprises two handles (32) at the ends of a strip or of cords.

9. A method of assembling a spooling assembly (1) with a rotation axle unit (20), comprising.
providing a spooling assembly comprising a reel (10), an optical cable (31) and a pre-connectorized rack (30) which is connected to said optical cable (31), wherein said optical cable (31) is at least partially wound on said reel (10) and wherein said pre-connectorized rack (30) is arranged within an inner volume (IV) of said reel (10),
providing a rotation axle unit (20) for rotating said reel (10), the unit (20) comprising two pivot pins (211, 212) projecting outwardly with respect to respective flanges (12) of said reel (10) and at least two elongate bars (23) **characterized by** passing said elongate bars (23) from one flange (12) of the reel (10) to an opposed flange (12) of the reel (10) through the inner volume of said reel, and
arranging said pre-connectorized rack between said at least two elongate bars.

## Patentansprüche

1. Spulenanordnung (1), umfassend eine Rolle (10), ein optisches Kabel (31), ein mit einem Verbinder versehenen Platinengehäuse (30), das mit dem optischen Kabel (31) verbunden ist, und eine Drehachseneinheit (20) zum Drehen der Rolle (10),
wobei das optische Kabel (31) wenigstens teilweise auf die Rolle (10) gewickelt ist, das mit einem Verbinder versehene Platinengehäuse (30) innerhalb eines Innenvolumens (IV) der Rolle (10) angeordnet ist,
die Drehachseneinheit (20) zwei Drehzapfen (211, 212) aufweist, die bezüglich der jeweiligen Flansche (12) der Rolle (10) nach außen vorstehen, und
die Drehachseneinheit (20) die Drehzapfen (211, 212) verbindet und wenigstens teilweise in dem Innenvolumen der Rolle (10) läuft,
**dadurch gekennzeichnet, dass**
die Drehachseneinheit (20) wenigstens zwei längliche Stangen (23) aufweist, und das mit einem Verbinder versehene Platinengehäuse (30) zwischen den wenigstens zwei Stangen (23) angeordnet ist.

2. Anordnung (1) nach Anspruch 1, bei dem die Drehachseneinheit (20) weiterhin eine erste und eine zweite Platte (221, 222) umfasst, wobei die wenigstens zwei Stangen (23) von der ersten Platte (221) zu der zweiten Platte (222) verlaufen und die erste sowie die zweite Platte (221, 222) mit jeweils einem Drehzapfen (211, 212) verbunden sind.

3. Anordnung (1) nach Anspruch 1, bei der das mit einem Verbinder versehene Platinengehäuse (30) in Bezug auf eine Rollenachse (X) in einer zentralen Position ordnungsgemäß angeordnet ist.

4. Anordnung (1) nach Anspruch 1, 2 oder 3, bei der die Rolle (10) gegenüberliegende Flansche (12) aufweist, wobei jeder der Flansche wenigstens zwei Löcher (12c) für die wenigstens zwei länglichen Stangen (23) aufweist.

5. Anordnung (1) nach einem der vorhergehenden Ansprüche, bei der die Rolle (10) gegenüberliegende Flansche (12) aufweist, wobei wenigstens einer der Flansche einen Schlitz (13) zum Durchführen des optischen Kabels (31) aufweist.

6. Anordnung (1) nach einem der vorhergehenden Ansprüche, die weiterhin einen Körper aus Füllmaterial umfasst, der in dem Innenvolumen der Spule angeordnet ist.

7. Anordnung (1) nach einem der vorhergehenden Ansprüche, weiterhin umfassend eine Griffanordnung, um das Herausziehen des mit einem Verbinder versehenen Platinengehäuses (30) aus der Trommel zu erleichtern.

8. Anordnung (1) nach Anspruch 7, bei der die Griffanordnung zwei Griffe (32) an den Enden eines Streifens oder von Schnüren aufweist.

9. Verfahren zum Zusammensetzen einer Spulenanordnung (1) mit einer Drehachseneinheit (20), umfassend:
Bereitstellen einer Spulenanordnung, die eine Rolle (10), ein optisches Kabel (31) und ein mit einem Verbinder versehenes Platinengehäuse (30) umfasst, das mit dem optischen Kabel (31) verbunden ist, wobei das optische Kabel (31) wenigstens teilweise auf die Rolle (10) gewickelt wird und das mit einem Verbinder versehene Platinengehäuse (30) innerhalb eines Innenvolumens (IV) der Rolle (10) angeordnet wird,
Bereitstellen einer Drehachseneinheit (20) zum Drehen der Rolle (10), wobei die Einheit (20) zwei Drehzapfen (211, 212), die in Bezug auf jeweilige Flansche (12) der Rolle (10) nach außen ragen, und wenigstens zwei längliche Stangen (23) umfasst, **gekennzeichnet durch**
Führen der länglichen Stangen (23) von einem Flansch (12) der Rolle (10) zu einem gegenüberliegenden Flansch (12) der Rolle (10) durch das Innenvolumen der Rolle und
Anordnen des mit einem Verbinder versehenen Platinengehäuses zwischen den wenigstens zwei länglichen Stangen.

## Revendications

1. Ensemble d'enroulement (1) comprenant une bobine (10), un câble optique (31), un support pré-équipé de connecteurs (30) qui est connecté audit câble optique (31) et une unité à axe de rotation (20) pour mettre en rotation ladite bobine (10),
dans lequel ledit câble optique (31) est au moins partiellement enroulé sur ladite bobine (10),
dans lequel ledit support pré-équipé de connecteurs (30) est agencé dans un volume interne (IV) de ladite bobine (10),
dans lequel ladite unité à axe de rotation (20) comprend deux tiges de pivotement (211, 212) faisant saillie vers l'extérieur par rapport aux brides (12) respectives de ladite bobine (10),
dans lequel ladite unité à axe de rotation (20) connecte lesdites tiges de pivotement (211, 212) et s'étend au moins partiellement dans le volume interne de ladite bobine (10),
**caractérisé en ce que**
ladite unité à axe de rotation (20) comprend au moins deux barres allongées (23), et
dans lequel ledit support pré-équipé de connecteurs (30) est agencé entre lesdites au moins deux barres (23).

2. Ensemble (1) selon la revendication 1, dans lequel ladite unité à axe de rotation (20) comprend en outre une première et une seconde plaque (221, 222), dans lequel lesdites au moins deux barres (23) s'étendent de ladite première plaque (221) à ladite seconde plaque (222) et dans lequel lesdites première et seconde plaques (221, 222) sont connectées à une tige de pivotement respective (211, 212).

3. Ensemble (1) selon la revendication 1, dans lequel ledit support pré-équipé de connecteurs (30) est convenablement agencé dans une position centrale par rapport à un axe de bobine (X).

4. Ensemble (1) selon la revendication 1, 2 ou 3, dans lequel ladite bobine (10) comprend des brides (12) opposées, dans lequel chacune desdites brides comprend au moins deux trous (12c) pour lesdites au moins deux barres allongées (23).

5. Ensemble (1) selon l'une quelconque des revendications précédentes, dans lequel ladite bobine (10) comprend des brides (12) opposées, dans lequel au moins l'une desdites brides comprend une fente (13) pour le passage dudit câble optique (31).

6. Ensemble (1) selon l'une quelconque des revendications précédentes, comportant en outre un corps de matériau de remplissage agencé dans le volume interne de ladite bobine.

7. Ensemble (1) selon l'une quelconque des revendications précédentes, comportant en outre un agencement de manches afin de faciliter l'extraction du support pré-équipé de connecteurs (30) depuis le tambour.

8. Ensemble (1) selon la revendication 7, dans lequel ledit agencement de manches comprend deux manches (32) au niveau des extrémités d'une bande ou de cordons.

9. Procédé d'assemblage d'un ensemble d'enroulement (1) avec une unité à axe de rotation (20), comprenant :
la fourniture d'un ensemble d'enroulement comprenant une bobine (10), un câble optique (31) et un support pré-équipé de connecteurs (30) qui est connecté audit câble optique (31), dans lequel ledit câble optique (31) est au moins partiellement enroulé sur ladite bobine (10) et dans lequel ledit support pré-équipé de connecteurs (30) est agencé à l'intérieur d'un volume interne (IV) de ladite bobine (10),
la fourniture d'une unité à axe de rotation (20) pour mettre en rotation ladite bobine (10), l'unité (20) comprenant deux tiges de pivotement (211, 212) faisant saillie vers l'extérieur par rapport aux brides (12) respectives de ladite bobine (10) et au moins deux barres allongées (23) **caractérisé par**
le passage desdites barres allongées (23) d'une bride (12) de la bobine (10) vers une bride (12) opposée de la bobine (10) à travers le volume interne de ladite bobine, et
l'agencement dudit support pré-équipé de connecteurs entre lesdites au moins deux barres allongées.
